# EUROPÄISCHE PATENTANMELDUNG

(11) **EP 1 541 271 A2**
(43) Veröffentlichungstag der Anmeldung: **15.06.2005**
(21) Anmeldenummer: 04105516.1
(22) Anmeldetag: 04.11.2004
(51) Int. Cl.: B23H 7/26

(54) **Vorrichtung zum elektroerosiven Bearbeiten von Werkstücken**

(30) Priorität: 10.12.2003 DE 10357648
(71) Anmelder: ROBERT BOSCH GMBH, 70442 Stuttgart (DE)
(72) Erfinder: Grota, Beate, 96103 Hallstadt (DE)

(57) **Zusammenfassung**

Vorrichtung zum elektroerosiven Bearbeiten von metallischen Werkstücken (20) mit einer drahtförmigen Elektrode (1), die in einer ersten Führung (2) geführt ist und die so an das Werkstück (20) heranführbar ist, dass zwischen einem Elektrodenende (17) und dem Werkstück (20) ein Arbeitsspalt verbleibt. Mit der Elektrode (1) und dem Werkstück (20) ist einer Spannungsquelle (6) verbunden, so dass dazwischen eine elektrische Spannung erzeugt wird und abhängig von der Größe des Arbeitsspalts ein Erosionsstrom zwischen der Elektrode (1) und dem Werkstück (20) fließt. Durch ein Magnetfeld (4) wird die Elektrode (1) abhängig von der Stärke des Erosionsstroms so ausgelenkt, dass sich die axiale Erstreckung der Elektrode (1) und damit die Größe des Arbeitsspalts ändert. Die drahtförmige Elektrode (1) wird zwischen der ersten Führung (2) und dem Werkstück (20) in einer zweiten Führung (10) geführt, durch die die Elektrode (1) in eine Taumelbewegung um einen Taumelpunkt (25) versetzt werden kann (Figur 1).

## Beschreibung

### Stand der Technik

Die Erfindung geht von einer Vorrichtung zum elektroerosiven Bearbeiten von Werkstücken aus, wie sie aus der DE 101 55 607 A1 bekannt ist. Bei der bekannten Vorrichtung wird eine drahtförmige Elektrode durch eine erste Führung auf ein Werkstück abgesenkt, von dem Material abgetragen werden soll. Die Elektrode wird bis auf einen Arbeitsspalt an das Werkstück angenähert, wobei zwischen der Elektrode und dem Werkstück eine Spannung angelegt wird. Ist der Arbeits spalt klein genug, so beginnt zwischen der Elektrode und dem Werkstück, abhängig von der Größe des Arbeitsspalts, ein Erodierstrom zu fließen, der zu einer Abtragung von Material aus dem Werkstück führt. Um einen reproduzierbaren Erodierprozess zu ermöglichen, muss die Größe des Arbeitsspalts stets nachgeregelt werden. Hierzu ist in oder vor der Führung ein Magnetfeld vorgesehen und so ausgerichtet, dass dadurch auf die Elektrode eine Lorenz-Kraft senkrecht zur Stromrichtung wirkt. Diese Kraft ist um so stärker, je größer der Erodierstrom ist, also je weiter sich die Elektrode dem Werkstück nähert. Durch die Auslenkung der drahtförmigen Elektrode vergrößert sich der Arbeitsspalt entsprechend und der gewünschte Wert wird wieder hergestellt. Ist der Arbeitsspalt hingegen zu groß, vermindert sich der Erodierstrom und der Arbeitsspalt wird durch die nachlassende Lorenz-Kraft wieder auf den gewünschten Wert verkleinert. In gewissen Grenzen ist diese Regelung also selbststabilisierend, so dass es keiner ständigen Nachregelung des Arbeitsspalts durch eine externe Steuerung bedarf.

Die bekannte Vorrichtung weist jedoch den Nachteil auf, dass sie sich nicht für das Erodieren von konischen Löchern eignet, wie sie beispielsweise in Kraftstoffeinspritzventilen benötigt werden. Die bekannte Regelung des Arbeitsspalts arbeitet nur dann in der gewünschten Weise, wenn damit zylindrische Löcher in Werkstücke eingebracht werden.

### Vorteile der Erfindung

Die erfindungsgemäße Vorrichtung mit den kennzeichnenden Merkmalen des Patentanspruchs 1 weist demgegenüber den Vorteil auf, dass mit einer automatischen Arbeitsspaltregelung konische Ausnehmungen in einem Werkstück herstellbar sind. Hierzu ist zwischen der ersten Führung der Elektrode und dem Werkstück eine zweite Führung vorgesehen, in der die drahtförmige Elektrode geführt ist und die die Elektrode in eine Taumelbewegung um einen Taumelpunkt versetzt. Hierdurch kann mit der Elektrode eine konische Ausnehmung erodiert werden, ohne die Vorteile der systemimmanenten Arbeitsspaltregelung aufgeben zu müssen.

Durch die abhängigen Ansprüche sind vorteilhafte Weiterbildungen des Gegenstandes der Erfindung möglich. In einer ersten vorteilhaften Ausgestaltung ist die zweite Führung so beweglich, dass der in der zweiten Führung befindliche Teil der Elektrode einen Kreiskegel beschreibt, dessen Spitze der Taumelpunkt ist. Bei einer solchen Bewegung lässt sich der Taumelpunkt vor, in oder hinter dem Werkstück plazieren, so dass sich verschiedene Konizitäten und auch Doppelkonizitäten fertigen lassen.

In einer weiteren vorteilhaften Ausgestaltung ist die zweite Führung als Bohrung in einem Bauteil ausgebildet, in welcher Bohrung die drahtförmige Elektrode geführt ist. Das Bauteil ist drehbar gelagert und bewegt sich dabei so um eine Drehachse, dass die Drehachse mit der Bohrung einen Winkel größer 0° einschließt. Durch diese Ausgestaltung lässt sich in einfacher Weise die gewünschte Konizität erreichen. Besonders gut arbeitet diese Vorrichtung, wenn ein Winkel zwischen Bohrung und Drehachse zwischen 0° und 15° eingestellt ist, wobei sich der maximal mögliche Winkel nach dem Verhältnis zwischen Breite und Tiefe der Ausnehmung richtet.

### Zeichnung

In der Zeichnung ist eine Vorrichtung zum elektroerosiven Bearbeiten von Werkstücken dargestellt. Es zeigt
- Figur 1: eine schematische Darstellung einer erfindungsgemäßen Erodiervorrichtung,
- Figur 2: ein Kraftstoffeinspritzventil im Längsschnitt,
- Figur 3: eine vergrößerte Darstellung des mit III bezeichneten Ausschnitts von Figur 2,
- Figur 4: und
- Figur 5: verschiedene lochförmige Ausnehmungen, wie sie mit der erfindungsgemäßen Vorrichtung erzeugt werden können.

### Beschreibung des Ausführungsbeispiels

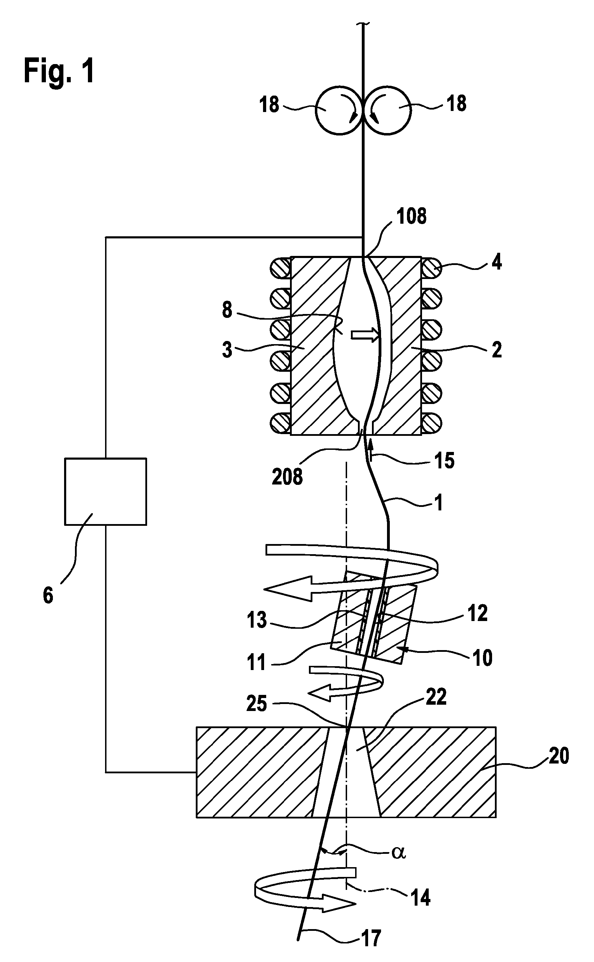

In Figur 1 ist eine erfindungsgemäße Vorrichtung zum elektroerosiven Bearbeiten von Werkstücken dargestellt. Eine drahtförmige Elektrode 1 ist durch eine erste Führung 2 gefädelt, wobei die erste Führung 2 einen Führungskörper 3 aufweist, in dem ein Hohlraum 8 mit einer Eintrittsöffnung 108 und einer Austrittsöffnung 208 ausgebildet ist, in welchen die Elektrode 1 eng geführt ist. Der Hohlraum 8 ist zwischen der Eintrittsöffnung 108 und der Austrittsöffnung 208 erweitert, so dass hier eine Verschiebung der Elektrode 1 senkrecht zu ihrer Längserstreckung möglich ist. Durch einen in der Zeichnung nicht dargestellten Permanent- oder Elektromagneten kann im Hohlraum 8 ein zeitlich konstantes Magnetfeld 4 angelegt werden, das in der Figur 1 durch die entsprechenden Feldlinien gekennzeichnet ist, die aus der Zeichenebene herauszeigen. Die drahtförmige Elektrode 1 verläuft nach der ersten Führung 1 durch eine zweite Führung 10, welche einen zweiten Führungskörper 11 mit einer darin ausgebildeten Bohrung 12 umfasst. Der zweite Führungskörper 11 ist um eine Drehachse 14 rotierbar gelagert, so dass bei einer Rotation des zweiten Führungskörpers 11 um die Drehachse 14 die drahtförmige Elektrode 1 eine Taumelbewegung um einen Taumelpunkt 25 ausführt. Der Winkel α, den die Drehachse 14 und die Längsachse der Bohrung 12 einschließen, gibt den halben Öffnungswinkel des Kreiskegels vor, den die Elektrode 1 bei ihrer Taumelbewegung um den Taumelpunkt 25 beschreibt.

Zur Bearbeitung eines Werkstücks 20, das aus einem elektrisch leitenden Material bestehen muss, vorzugsweise Metall, wird die Elektrode 1 durch Vorschutsoweit abgesenkt, dass zwischen dem Werkstück 20 und dem Elektrodenende 17 ein Arbeitsspalt verbleibt. Zwischen dem Werkstück 20 und der Elektrode 1 ist eine Spannungsquelle 6 geschaltet, die eine geeignete elektrische Spannung erzeugt. Der Arbeitsspalt wird zum Erodieren so eingestellt, dass zwischen dem Werkstück 20 und der Elektrode ein Erosionsstrom fließt, dessen technische Stromrichtung in der Zeichnung mit einem Pfeil 15 gekennzeichnet ist. Da sich die Elektrode 1 und das Werkstück hierbei nicht berühren, springt ein Funke von der Elektrode 1 auf das Werkstück 20 über, der im Werkstück 20 und auch am Elektrodenende 17 zu einem Materialabtrag führt. Durch den Materialabtrag ändert sich die Größe des Arbeitsspalts und damit auch der Strom zwischen der Elektrode 1 und dem Werkstück 20. Um den Materialabtrag an der Elektrode 1 auszugleichen muss diese ständig nachgeschoben werden, was durch zwei Rollen 18 geschieht, die entsprechend angesteuert und geregelt für den nötigen Vorschub der Elektrode 1 sorgen. Dieses Nachführen eignet sich jedoch nicht, um den Arbeitsspalt in den engen Grenzen, die für ein präzises Erodieren kleinster Bohrungen nötig ist, konstant zu halten. Deshalb ist in der ersten Führung 2 der Permanent- oder Elektromagnet vorgesehen: Nähert sich die Elektrode 1 dem Werkstück zu nahe an, verstärkt sich der Erosionsstrom. Dies bewirkt eine Erhöhung der auf die Elektrode 1 in der Führung 2 wirkenden Lorenz-Kraft, so dass die Elektrode 1 - wie in der Figur 1 gezeigt - senkrecht zur Stromrichtung und zum Magnetfeld ausgelenkt wird. Dadurch zieht sich das Elektrodenende 17 etwas zurück, so dass der Arbeitsspalt wieder auf den gewünschten Wert vergrößert wird. Wird der Abstand zwischen Elektrode 1 und Werkstück 20 hingegen zu groß, erniedrigt sich der Erosions strom entsprechend und die Elektrode 1 begradigt sich in der ersten Führung 1, so dass das Elektrodenende 17 wieder an das Werkstück 20 herangeführt wird. Durch diese selbsttätige Regelung wird der Arbeitsspalt präzise auf einem gewünschten Wert konstant gehalten, und die Elektrode 1 kann mit einer relativ groben Regelung nachgeschoben werden, um deren Abtrag am Elektrodenende 17 auszugleichen.

Zur Fertigung von konischen Ausnehmungen 22 im Werkstück 20, also vornehmlich von Bohrungen, deren Querschnitt sich zu einem Ende hin erweitert, ist eine zweite Führung 10 vorgesehen, die einen zweiten Führungskörper 11 mit einer Bohrung 12 umfasst, in der die Elektrode 1 geführt ist. Der zweite Führungskörper 11 ist drehbar um eine Drehachse 14 gelagert, wobei die Bohrung 12 mit der Drehachse 14 einen Winkel α einschließt. Bei der Drehung des Bauteils 11 beschreibt die Elektrode 1 in der zweiten Führung 10 und auch der Teil der Elektrode 1, der aus der zweiten Führung 10 herausragt, eine Taumelbewegung um einen Taumelpunkt 25. Wenn der zweite Führungskörper 11 eine einfache Drehbewegung um die Drehachse ausfährt, beschreibt die Elektrode 1 in der zweiten Führung 10 einen Kreiskegel, dessen Spitze der Taumelpunkt 25 ist. Ändert sich hingegen der Winkel α abhängig vom Drehwinkel des zweiten Führungskörpers 11 bei seiner Bewegung um die Drehachse 14, so ergibt sich beispielsweise ein Kegel mit einer elliptischen bzw. ovalen Grundfläche, dessen Spitze aber nach wie vor der Taumelpunkt 25 ist. Um einen unerwünschten Kurzschluss zu vermeiden ist es bei einem metallischen zweiten Führungskörper 11 nötig, die Innenwand der Bohrung 12 mit einer elektrisch isolierenden Beschichtung 13 zu versehen. Ebenso muss der Hohlraum 8 der ersten Führung 2 eine ebensolche Beschichtung aufweisen. Alternativ kann auch die Führung 2 aus einem nicht elektrisch leitenden Material gefertigt werden. Auch ist es möglich, den zweiten Führungskörper 11 aus einem elektrisch isolierenden Material zu fertigen, beispielsweise aus einer Keramik. Die Innenwand der Bohrung 12 kann dann auch mit einer metallischen Beschichtung versehen sein.

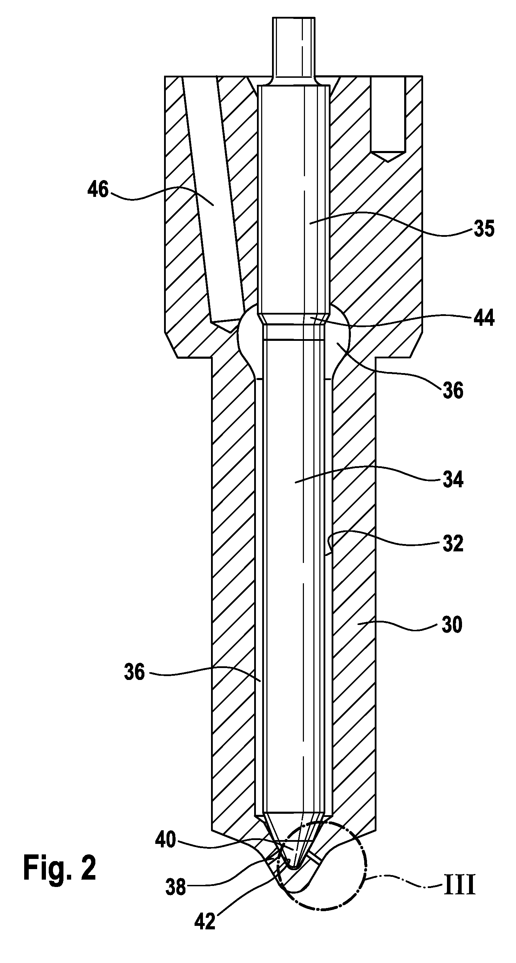

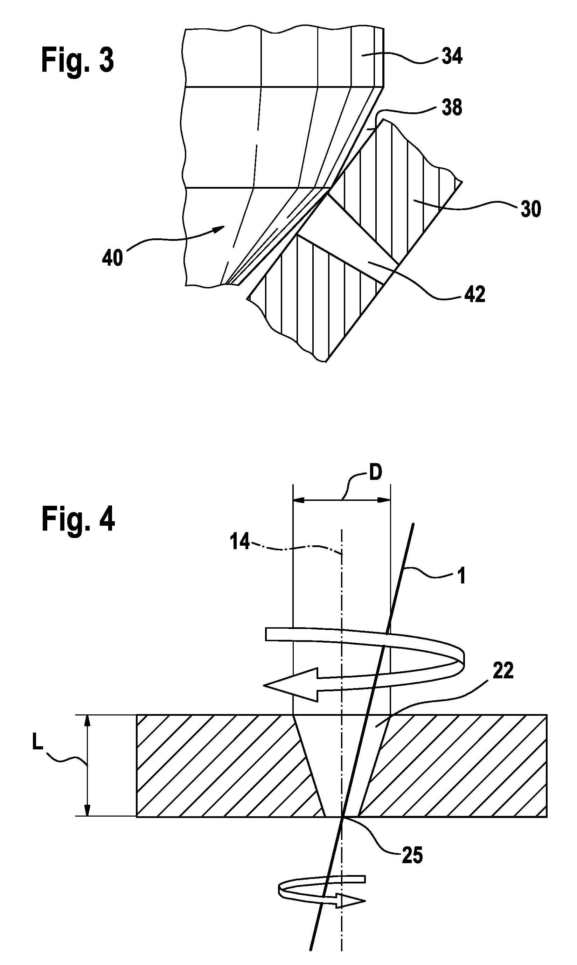

Wenn der Taumelpunkt bei der Bewegung der zweiten Führung 10 mit der Oberfläche des Werkstücks zusammenfällt, so ergibt sich durch das Erodieren eine lochförmige Ausnehmung 22, wie sie in Figur 1 im Längsschnitt dargestellt ist. Die lochförmige Ausnehmung 22 weist eine Konizität auf, bei der sich der Durchmesser stetig mit der Länge ändert. Solche lochförmigen Ausnehmungen 22 sind beispielsweise für Kraflstoffeinspritzventile nötig, wie sie bei Dieselmotoren Verwendung finden. In Figur 2 ist exemplarisch ein aus dem Stand der Technik hinlänglich bekanntes Kraftstoffeinspritzventil im Längsschnitt gezeigt. In einem Ventilkörper 30, der hier dem Werkstück 20 entspricht, ist eine Längsbohrung 32 ausgebildet, die an ihrem Ende von einem konischen Ventilsitz 38 begrenzt wird. In der Längsbohrung 32 ist eine Ventilnadel 34 längsverschiebbar angeordnet, die an ihrem dem Ventilsitz 38 zugewandten Ende eine konische Ventildichtfläche 40 aufweist, mit der sie mit dem Ventilsitz 38 zusammenwirkt. Vom Ventilsitz 38 gehen mehrere Einspritzbohrungen 42 aus, die in den Brennraum münden. Zwischen der Ventilnadel 34 und der Wand der Längsbohrung 32 ist ein Druckraum 36 ausgebildet, der über einen im Ventilkörper 30 verlaufenden Zulaufkanal 46 mit Kraftstoff unter hohem Druck befüllbar ist. Durch die Druckbeaufschlagung einer Druckschulter 44 und einer entsprechenden Gegenkraft auf die ventilsitzabgewandte Stirnseite der Ventilnadel 34 kann die Ventilnadel 34 in der Längsbohrung 32 bewegt werden, so dass die Einspritzbohrungen 42 freigegeben oder verschlossen werden. Der Kraftstoff steht hierbei im Druckraum 36 unter einem sehr hohen Druck, um eine gute Zerstäubung bei der Einspritzung in den Brennraum zu erreichen. Durch eine Konizität der Einspritzbohrung 42, wie sie in Figur 3 als Vergrößerung des mit III bezeichneten Ausschnitts der Figur 2 dargestellt ist, erreicht man eine Beschleunigung der Kraftstoffströmung in der Einspritzbohrung 42 und damit eine größere Austrittsgeschwindigkeit, wodurch sich die Zerstäubung entsprechend verbessert. Mit der oben beschriebenen Vorrichtung ist es somit möglich, eine derartige Einspritzbohrung 42 von außen in einen Ventilkörper 30 einzubringen.

In Figur 4 ist eine weitere Möglichkeit dargestellt, wie eine lochförmige Ausnehmung 22 mit im Vergleich zur Figur 1 umgekehrten Konizität erzeugt werden kann. Hierzu wird der Taumelpunkt 25 der zweiten Führung 10 auf die Rückseite des Werkstücks 20 gelegt. Beim Vorschub der Elektrode und gleichzeitiger Bewe-gung der zweiten Führung 10 um den Taumelpunkt 25 ergibt sich dann die gewünschte Form.

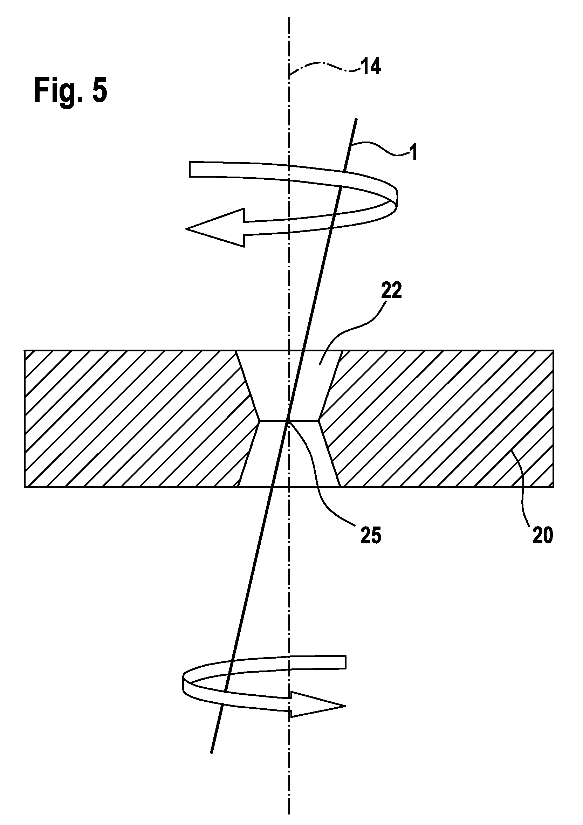

Figur 5 zeigt eine weitere Möglichkeit, bei der der Taumelpunkt 25 innerhalb des Werkstücks 20 liegt. Beim Erodieren ergibt sich so ein Doppelkonus der lochförmigen Ausnehmung 22, so dass der engste Querschnitt in der Ebene des Taumelpunkts und innerhalb des Werkstücks ausgebildet wird. Eine solche Form ist beispielsweise bei sogenannten Laval-Düsen erwünscht.

Der Winkel α, den die Drehachse 14 mit der Bohrung 12 der zweiten Führung 10 einschließt, kann in weiten Bereichen variiert werden. Welcher α Winkel maximal möglich ist, hängt von den Dimensionen der Ausnehmung 22 ab. Ist das Verhältnis von eintrittsseitigem Durchmesser D der Ausnehmung 22 zur ihrer Länge L D/L etwa 0,1 (siehe Figur 4), so ergibt sich ein möglicher Winkelbereich von 0° bis 15°. Bei einem Verhältnis von D/L = 0,5 erweitert sich der mögliche Winkelbereich auf 0° bis 45°.

## Patentansprüche

1. Vorrichtung zum elektroerosiven Bearbeiten von metallischen Werkstücken (20) mit einer drahtförmigen Elektrode (1), die in einer ersten Führung (2) geführt ist und die so an das Werkstück (20) heranführbar ist, dass zwischen einem Elektrodenende (17) und dem Werkstück (20) ein Arbeitsspalt verbleibt, und mit einer Spannungsquelle (6), durch die zwischen der Elektrode (1) und dem Werkstück (20) eine elektrische Spannung erzeugt wird, wodurch abhängig von der Größe des Arbeitsspalts ein Erosionsstrom zwischen der Elektrode (1) und dem Werkstück (20) fließt, und mit einem Magnetfeld (4), durch das die Elektrode (1) so ausgelenkt wird, dass sich abhängig von der Höhe des Erosionsstroms die axiale Erstreckung der Elektrode (1) und damit die Größe des Arbeitsspalts ändert, **dadurch gekennzeichnet, dass** die drahtförmige Elektrode (1) zwischen der ersten Führung (2) und dem Werkstück (20) in einer zweiten Führung (10) geführt ist, durch welche die Elektrode (1) in eine Taumelbewegung um einen Taumelpunkt (25) versetzt werden kann.

2. Vorrichtung nach Anspruch 1, bei der der in der zweiten Führung (10) befindliche Abschnitt der drahtförmigen Elektrode (1) bei der Taumelbewegung einen Kreiskegel beschreibt, wobei der Taumelpunkt (25) die Spitze dieses Kreiskegels bildet.

3. Vorrichtung nach Anspruch 1, bei der der Taumelpunkt (25) auf der Oberfläche des Werkstücks (20) liegt.

4. Vorrichtung nach Anspruch 1, bei der der Taumelpunkt (25) innerhalb des Werkstücks (20) liegt.

5. Vorrichtung nach Anspruch 1, bei der der Taumelpunkt (25) auf der der Elektrode (1) abgewandten Oberfläche des Werkstücks (20) liegt.

6. Vorrichtung nach Anspruch 1, bei der das Magnetfeld (4) innerhalb der ersten Führung (2) ausgebildet ist.

7. Vorrichtung nach Anspruch 1, bei der das Magnetfeld (4) der zweiten Führung (10) abgewandt außerhalb der ersten Führung (2) ausgebildet ist.

8. Vorrichtung nach Anspruch 1, bei der die zweite Führung (10) durch eine in einem zweiten Führungskörper (11) ausgebildete Bohrung (12) gebildet wird, in der die Elektrode (1) geführt ist, wobei das Bauteil (20) drehbar um eine Drehachse (14) gelagert ist und die Bohrung (12) mit der Drehachse (14) einen Winkel (α) größer als 0° einschließt.

9. Vorrichtung nach Anspruch 8, bei der der Winkel (α) zwischen der Bohrung (12) und der Drehachse (14) zwischen 0° und 15° liegt.

10. Vorrichtung nach Anspruch 8, bei der die Bohrung (12) auf ihrer Innenwand eine isolierende Beschichtung (13) aufweist.

11. Vorrichtung nach Anspruch 1, bei der sich der Winkel (α) abhängig vom Drehwinkel des zweiten Führungskörpers (11) um die Drehachse (14) ändert.
